# EUROPÄISCHE PATENTSCHRIFT

(11) **EP 0 511 197 B1**
(45) Veröffentlichungstag und Bekanntmachung des Hinweises auf die Patenterteilung: **11.01.1995**
(21) Anmeldenummer: 92890093.5
(22) Anmeldetag: 16.04.1992
(51) Int. Cl.: A23G 3/02, B01J 4/02, B01J 2/20

(54) **Vorrichtung zur portionierten Abgabe von fliessfähigen Massen**
Device for the portion-wise release of fluid masses
Dispositif pour délivrer de manière dosée des masses fluides

(30) Priorität: 26.04.1991 US 693235
(43) Veröffentlichungstag der Anmeldung: 28.10.1992
(73) Patentinhaber: BERNDORF BAND GesmbH, A-2560 Berndorf (AT)
(72) Erfinder: Schwager, Jules, Schaumburg, Illinois 60193 (US)
(74) Vertreter: Widtmann, Georg, Dipl.-Ing. Dr. techn.

(56) Entgegenhaltungen:
- EP-A- 0 012 192
- EP-A- 0 166 200
- EP-A- 0 363 975
- EP-A- 0 477 164
- WO-A-87/06880

## Beschreibung

Die Erfindung bezieht sich auf eine Vorrichtung zur portionierten Abgabe von fließfähigen Massen mit einer um mehr als 360° drehbaren Trommel und einer unter dieser angeordneten die Masseportionen aufnehmenden Transporteinrichtung.

Vorrichtungen zur portionierten Abgabe von fließfähigen Massen auf eine Fördereinrichtung weisen einen vielfachen Einsatz auf. Sämtliche Substanzen, sei es Kunstharze, Speisemassen, Chemikalien, Pharmazeutika u. dgl., die beispielsweise durch Kälteeinwirkung, Wärmeeinwirkung oder auch chemische Reaktion von einer fließfähigen Form in eine teste Form übergeführt werden können, sind mit derartigen Vorrichtungen portionierbar.

Bei diesen Vorrichtungen wird angestrebt, daß einerseits die einzelnen Masseportionen, insbesondere in Form von Pellets gleiche Masse und Gestalt aufweisen, und wenn sie in Form von einzelnen Plätzchen erwünscht sind, untereinander keine Verbindungen, die durch Nachlaufen der ausgepreßten Substanzen entstehen, vorliegen. Weiters sollen derartige Anlagen einen hohen Durchsatz aufweisen.

Durch die Abstimmung der Umlaufgeschwindigkeit der Fördereinrichtung, beispielsweise eines endlosen Stahlbandes, unter der Trommel und der Umlaufgeschwindigkeit der Trommel kann die Form der abgesetzten Massetropfen festgelegt werden. Weisen die fallenden Tropfen in Bewegungsrichtung der Fördereinrichtung, also beispielsweise des endlosen Bandes, dieselbe Geschwindigkeit wie diese auf, so wird vermieden, daß die Massetropfen eine bevorzugte Verbreitungsrichtung aufweisen, sondern lediglich die Adhäsionskräfte zwischen der Oberfläche der Fördereinrichtung und der fließfähigen Masse bedingen die Größe des im wesentlichen kreisförmigen Tropfens. Auf der Fördereinrichtung selbst tritt sodann beispielsweise durch Wärmeeinwirkung, durch Kühlung oder auch durch chemische Reaktion, aber selbst auch tixotrope Substanzen können durch Endigen einer Mischbewegung erstarren, verfestigt werden. Die sodann verfestigten Masseportionen werden in bekannter Weise von der Transporteinrichtung abgezogen, beispielsweise am Ende einer Umlenkrolle für das endlose Band von demselben abgespalten.

Wesentlich für die störungsfreie Funktion einer derartigen Vorrichtung ist nun, daß einerseits die Massen unter gleichmäßigem Druck allen in Funktionsstellung befindlichen Austrittsöffnungen zugeführt werden können. Aus der EP A 0477164 wird eine derartige Vorrichtung zum gleichmäßigen Zuführen von fließfähigen Massen in eine portionierende Einrichtung bekannt, wobei eine äußere rotierende Trommel vorgesehen ist, innerhalb welcher ein exzentrisch zu dieser gelagertes Flügelrad vorgesehen ist, dessen in radialer Richtung verstellbare Lamellen während der Rotation mit der inneren zylindrischen Wandung der äußeren Trommel kooperieren. Durch die exzentrische Lagerung des Flügelrades werden die Volumina der einzelnen Sektionen während des Drehens geändert, so daß einerseits fließfähige Massen von außen, beispielsweise von einem oberhalb der Trommel angeordneten Behälter angesaugt werden können und anderseits wieder oberhalb der Förderrichtung ausgepreßt werden. Bei einer derartigen Vorrichtung tritt der Vorteil ein, daß durch geeignete Anordnung des Zellenrades und der äußeren Trommel nach Durchschreiten einer Reihe von Bohrungen an ihrer untersten Stelle das Volumen oberhalb dieser Bohrungen, das über die Trommelinnenwandung und das Zellenrad gebildet ist, sich wieder vergrößert, so daß die außen auf der Trommel betindliche Masse oder auch die in den Bohrungen befindliche Masse in den Hohlraum zurückgesaugt wird. Eine derartige Vorrichtung weist allerdings den Nachteil auf, daß bei geringen Adhäsionskräften zwischen dem Material der Trommel und dem auszupressenden Massen, insbesondere bei einer niedrigen Viskosität derselben, eine ungleichmäßige Verteilung der Massen auf der Trommel in Abhängigkeit von der Geschwindigkeit der Drehbewegung eintreten kann.

In der DE 28 53 054 C3 wird eine Vorrichtung zur portionierten Abgabe von fließfähigen Massen beschrieben, wobei ein drehender Zylinder oberhalb eines endlosen Bandes angeordnet ist. Der Zylinder weist eine Vielzahl von durchgehenden radialen Bohrungen auf und es wird in einem im Inneren angeordneten weiteren zylindrischen Behälter die fließfähige Masse axial zugeleitet. Im inneren Behälter ist lediglich in einem Bereich, u. zw. im unteren Scheitelbereich, eine Reihe von Bohrungen vorgesehen, durch die das Material, so sie sich mit Bohrungen des äußeren Zylinders decken, austreten kann. Der Materialaustritt wird hier durch den höheren Druck, der auf das Material im inneren Zylinder ausgeübt wird, verursacht. Um eine Verbreitung der fließfähigen Masen auf der äußeren zylindrischen Trommel zu verhindern, ist eine Rakel vorgesehen, die mit der äußeren Oberfläche der äußeren Trommel kooperiert, so daß die mit den Öffnungen der inneren Trommel in Kooperation kommenden Öffnungen an ihrem äußeren Bereich von der auszupressenden Masse befreit sind. Ein derartiger Schaber hat den Nachteil, daß das unter Umständen bereits erstarrte Material entlang der Oberfläche der äußeren Trommel in die nacheilenden Öffnungen gepreßt wird, so daß bei in Funktion befindlichen Öffnungen die Masse nicht aus allen gleichzeitig austreten kann, sondern erst gewisse Öffnungsvorgänge, wie beispielsweise Erwärmen der erstarrten Masse oder auch durch Druck Herauspressen derselben durchgeführt werden muß.

Die vorliegende Erfindung hat sich zur Aufgabe gestellt, eine Vorrichtung zur portionierten Abgabe von fließfähigen Massen zu schaffen, bei welcher Überschußmassen, die aus einem Kanal der äußeren Trommel ausgetreten sind, in die Bohrung zurückgeführt werden und bei welchen so erwünscht, eine Vorabkühlung der austretenden Massen, bevor sie auf die Transporteinrichtung fallen, erreicht werden kann.

Die erfindungsgemäße Vorrichtung zur portionierten Abgabe von fließfähigen Massen mit einer um eine im wesentlichen horizontalen Achse um mehr als 360° drehbaren Trommel mit einem zylinderförmigen Mantel, welcher eine Vielzahl durch diesen hindurchgeführte, insbesondere radial verlaufende Kanäle mit, vorzugsweise kreisförmigen, Austrittsöffnungen aufweist, einer Zuführeinrichtung für die fließfähigen Massen in das Innere der Trommel und einer unter der Trommel angeordneten, die Masseportionen aufnehmenden Transporteinrichtung, z. B. endlosen Band, auf welcher die Masseportionen, insbesondere Massetropfen, zumindest teilweise, verfestigen, besteht im wesentlichen darin, daß die Austrittsöffnungen der Kanäle auf Erhebungen am zylinderförmigen Mantel der drehbaren Trommel vorgesehen sind, die durch Täler voneinander getrennt sind. Mit einer derartigen Ausbildung wird eine zwangsweise Rückführung der Überschußmassen erreicht, welche nicht auf die Transporteinrichtung abgelagert wurden. Durch die spezifische Ausbildung der Oberfläche der Trommel wird einerseits erreicht, daß die Massen weg von den Austrittsöffnungen der Kanäle entlang der Erhebungen abgeleitet werden und gelangen dann unter Einwirkung der Adhäsionskräfte, Schwerkräfte und Zentrifugalkräfte während der Rotation einerseits entlang der Täler, anderseits über die Erhöhungen wieder zurück in die Austrittsöffnungen der Kanäle, in welchen sie sich mit der zur Extrusion gelangenden Massen vereinigen und sodann erneut ausgepreßt werden und dann auf die Transporteinrichtung gelangen. Wesentlich ist hiebei, daß die Austrittsöffnungen der Kanäle oberhalb der äußeren Basisfläche des zylinderförmigen Mantels der drehbaren Trommel sind, da mit einer derartigen Ausgestaltung auf Grund der Zentrigualkräfte eine Rückführung der Massen zur Austrittsöffnung erfolgt. Ein Nachtropfen unmittelbar nach Ende des Portioniervorganges wird durch die vergrößerte Oberfläche verhindert, da somit die Adhäsionskräfte entlang größerer Flächen auftreten können. Weiters kann ein Temperaturgradient vom Mantel zum Ende der Erhebung erhalten werden, so daß ein Vorabkühlen der austretenden Massen erreicht werden kann.

Sind die Erhebungen und Täler durch Bearbeitung der Oberfläche des Mantels gebildet, so kann eine Oberfläche erhalten werden, die keine unerwünschten Spalten und Diskontinuitäten aufweist, welche zum Anbauen von erstarrenden Massen führen kann.

Ist durch die Austrittsöffnungen eine zum zylinderförmigen Mantel konzentrische äußere Zylinderfläche definiert, in welcher die Austrittsöffnungen liegen, so kann eine vollkommen gleichmäßige Verteilung der ausgetretenen Restmassen auf Grund der Zentrifugalkräfte erreicht werden, da keine Austrittsöffnung gegenüber einer anderen einen bevorzugten Platz zur Ansammlung der extrudierten Massen darstellen kann.

Ist jede Austrittsöffnung in jeweils einer Fläche angeordnet, so wird eine konkurrenzierende Verteilung zwischen zwei Austrittsöffnungen vermieden, so daß eine gleichmäßige Portionierung der Massen besonders einfach erreicht wird.

Sind die aus dem Mantel herausragenden Erhebungen kegelstumpfförmig, so weisen sie in Richtung der Kanäle, bezogen auf den Umfang der Kegelstumpfe, gleichmäßige Temperaturgradienten auf und gewährleisten weiterhin besonders geringen Strömungswiderstand für die fließfähigen Massen auf der Trommelaußenfläche.

Sind die aus dem Mantel herausragenden Erhebungen pyramidenstumpfförmig, so können bevorzugte Täler für die Strömung der fließfähigen Massen gebildet werden, die beispielsweise in Umfangsrichtung oder auch normal dazu ausgerichtet sein können, so daß beispielsweise bei zu hoher Temperatur und damit bei zu geringer Viskosität der Masse dieselbe auf der Oberfläche verteilt werden kann, ohne daß ein unerwünschtes Abtropfen erfolgt, wobei gleichzeitig ein Abkühlen der Masse erreicht wird, so daß die Viskosität steigt und die Masse sodann wieder zu dem Bereich der Austrittsöffnung und dann mit der erwünschten Viskosität zugeführt wird.

Sind die Erhebungen durch in Bohrungen im Mantel festgelegte Einsätze gebildet, so können die Erhebungen beispielsweise aus anderem Material als der zylinderförmige Mantel gebildet werden, oder aber auch besteht die Möglichkeit, daß ein derartiger Mantel mit Erhebungen besonders einfach gefertigt werden kann, in dem die Einsätze in einem getrennten Arbeitsgang fertigbar sind und sodann erst in der Bohrung in dem Mantel befestigt werden.

Sind die Erhebungen in den Bohrungen lösbar befestigt, insbesondere eingeschraubt, so kann eine Adaption der Vorrichtung an die zu portionierenden fließfähigen Massen, beispielsweise durch Änderung der Form der Erhebungen, des Durchmessers des Kanales, der besonderen Ausbildung der Austrittsöffnung u. dgl. besonders einfach erfolgen.

Verlaufen die Täler entlang von Erzeugenden des zylinderförmigen Mantels, so kann erreicht werden, daß aus allen Erhebungen gleichzeitig die Masseportionen austreten, so daß keine gegenseitige nachteilige Beeinflussung durch die Restmassen bedingt ist.

Verlaufen die Täler in Umfangrichtung des zylinderförmigen Mantels, so wird eine besonders vorteilhafte gleichmäßige Verteilung der Restmassen auf dem Mantel erreicht.

Weisen die Erhebungen Flächen auf, die eine Fallinie besitzen, welche normal zur Längserstreckung der Täler verläuft, so ist ein besonders geringer Strömungswiderstand für die Restmassen in den Tälern gewährleistet.

Ist im Endbereich der Trommel zumindest eine radial verlaufende Nut vorgesehen, mit welcher die Erhebungen zu dem Trommelende abgegrenzt sind, wird auf einfache Weise vermieden, daß die Restmassen auf Oberflächen der Trommel verteilt werden, die keine Erhebungen mit Austrittsöffnungen aufweisen.

Ist in zumindest einem Endbereich der Trommel ein von Erhebungen freie, insbesondere zylindrische, Ringfläche vorgesehen, so ist eine weitere Barriere für die axiale Verteilung der Restmassen erreicht.

Sind die Erhebungen mit einem einheitlichen Abstand zueinander in Reihen entlang von Erzeugenden des zylinderförmigen Mantels angeordnet, so ist eine Vorrichtung mit besonders hohem Umsatz gewährleistet, da die maximale Anzahl von Masseportionen entlang einer Erzeugenden abgesetzt werden können.

Sind die Erhebungen mit einem einheitlichen Abstand zueinander in Reihen in Umfangsrichtung des zylinderförmigen Mantels hintereinander angeordnet, so kann auch hier eine Optimierung des Ausstoßes erreicht werden, wobei auch ein gleichmäßiges Verfestigen der Massetropfen am Band auf Grund des gleichmäßigen Abstandes der Massetropfen zueinander erreicht werden kann.

Ist eine Heizeinrichtung, die die Trommel in Abstand von derselben teilweise umgibt, insbesondere teilweise umhüllt, vorgesehen, so kann ein Rückfließen auch bei rasch erstarrenden Massen durch Erniedrigung der Viskosität über die Wärmeeinwirkung besonders einfach erreicht werden.

Weist die Heizeinrichtung einen, insbesondere elektrischen, Infrarotstrahler auf, so kann die Wärmemenge, welche auf die Oberfläche der Trommel aufgebracht wird, besonders genau gesteuert werden.

Weisen die Kanäle von der Austrittsöffnung bis zum Inneren der Trommel denselben Querschnitt mit identer Querschnittsfläche auf, so ist ein Kanal mit gleichbleibendem Strömungswiderstand gewährleistet, wobei weiters Wirbelstellen, Ecken u. dgl., in welchen Bereichen es zu Absetzungen des Materials kommen kann, besonders wirksam vermieden werden.

Münden die Kanäle während der Abgabe der fließfähigen Massen in das Innere der Trommel in einen Verteilerkanal, welcher parallel zur Achse der Trommel verläuft, so ist eine besonders einfache und zugleich wirkungsvolle Anspeisung der einzelnen Kanäle gewährleistet.

Ist der Verteilerkanal über in diesen über mündende Düsen gespeist, welche in Richtung der Achse verteilt angeordnet sind und zu welchen die fließfähigen Massen über einen parallel zur Achse der Trommel verlaufenden Zuleitkanal zugeführt werden, so kann eine gleichmäßige Verteilung der fließfähigen Masse erreicht werden, wobei gleichzeitig durch die Düsen, wenn diese beispielsweise über die untere Fläche des Zuleitkanales erhaben ausgebildet sind, vermieden wird, daß Feststoffe, die die Kanäle verstopfen könnten, in den Verteilerkanal und dann in die einzelnen Kanäle gelangen können.

Weisen die Düsen entsprechend der Druckverteilung im Zuleitkanal unterschiedlichen Querschnitt auf, so kann eine gleichmäßige Druckverteilung im Verteilerkanal für die fließfähigen Massen in Achsrichtung der Trommel erhalten werden.

Sind Austrittsöffnungen der Erhebungen an einer, insbesondere feststehenden, Rakel vorbeiführbar, so kann gegebenenfalls nach dem Situieren der Überschußmasse am Ende der Erhebung durch die Zentrifugalkräfte über die Rakel eine weitere Manipulation je nach Stellung der Rakel erreicht werden, so daß entweder die niederviskose Masse in den Kanal zurückgepreßt werden kann oder eine gleichmäßige Verteilung der Masse an der Trommel erreicht wird.

Sind die in Umfangsrichtung verlaufenden Täler und gegebenenfalls die Flächen der Erhebungen an der Rakel vorbeiführbar, also ist beispielsweise die Rakel kammartig ausgebildet, die sowohl über die Austrittsöffnungen als auch entlang der Erzeugenden der Kegel- bzw. Pyramidenflächen und im Tal anliegt, so kann bei bestimmten Fällen eine zusätzliche Ableitung von überschüssiger Masse erreicht werden.

Im folgenden wird die Erfindung anhand der Zeichungen nächer erläutert.

Es zeigen:
Fig. 1 eine perspektivische Ansicht einer Vorrichtung zur portionierten Abgabe,
Fig. 2 eine perspektivische Ansicht der Vorrichtung gemäß Fig. 1, teilweise demontiert und mit Heizeinrichtung,
Fig. 3 einen Querschnitt durch die Trommel und Heizeinrichtung samt Band der Vorrichtung gemäß Fig. 2,
Fig. 3a die Ansicht einer Rakel,
Fig. 4 eine Schnittdarstellung entlang der Linie IV -IV gemäß Fig. 3,
die Fig. 5 und 7 einen Querschnitt durch Erhebungen,
die Fig. 6 und 8 eine Draufsicht auf diese Erhebungen, und
Fig. 9 die Ansicht eines Randbereiches der Trommel gemäß Fig. 2.

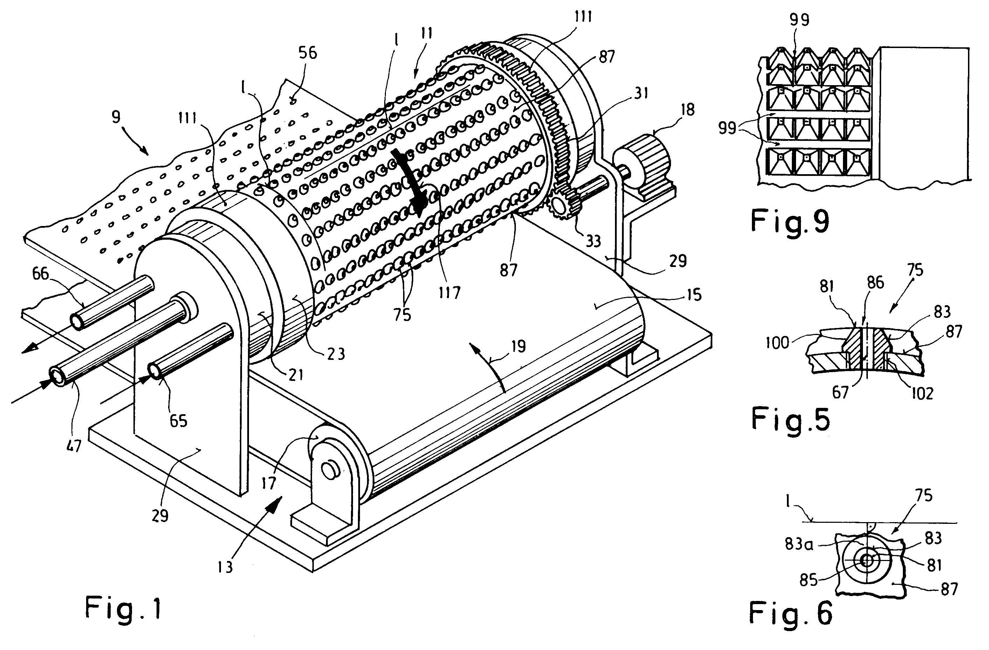

Die in Fig. 1 dargestellte Anlage 9 weist eine Vorrichtung 11 zur portionierten Abgabe von fließfähigen Massen auf, die oberhalb einer Transporteinrichtung 13 angeordnet ist, welche ein endloses Förderband 15 aus Stahl aufweist, das an beiden Enden um Walzen 17 umgelenkt wird (es ist lediglich eine Walze dargestellt). Das Förderband 15 wird durch einen nicht dargestellten Motor in Richtung des Pfeiles 19 bewegt.

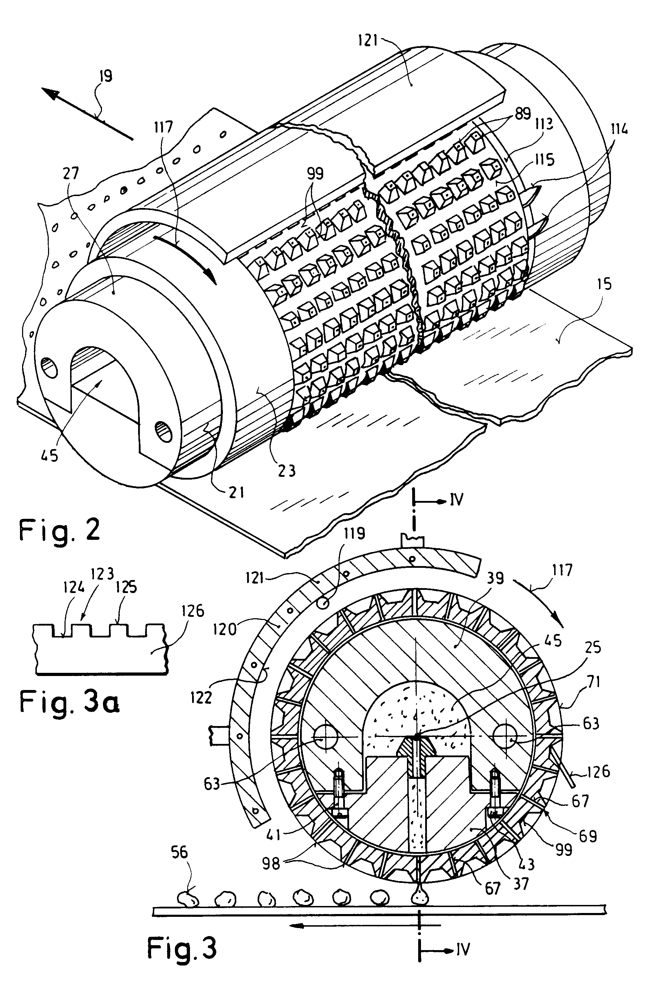

Wie aus den Fig. 2 und 3 ersichtlich, ist die Vorrichtung 11 mit einer in Richtung des Pfeiles 117 um mehr als 360° drehbaren Trommel 23 mit zylinderförmigem Mantel und einem inneren konzentrischen Zylinder 21 gebildet, welche eine gemeinsame horizontale Achse 25 aufweisen (Fig. 3). Die Trommel 23 gleitet auf der äußeren Zylinderoberfläche 27 des inneren Zylinders 21, wobei diese als Lagerfläche dient, welche die relative Rotation des Zylinders 21 und Trommel 23 zueinander ermöglicht.

In der hier beschriebenen Ausführungsform ist der innere Zylinder 21 durch die Halterung 29 festgelegt, wie in Fig. 1 dargestellt. Die Halterung 29 kann beliebig ausgeführt sein. Der innere Zylinder 21 und damit auch die Trommel 23 sind waagrecht oberhalb des Förderbandes 15 angeordnet.

Die Trommel 23 bildet eine um die Achse 25 drehbare Umhüllung für den stationären inneren Zylinder 21. Die Rotation der Trommel 23 wird durch den Motor 18 über das Antriebszahnrad 33 und den umgehenden Zahnkranz 31 (Fig. 1) am Ende der Trommel 23 ermöglicht. Andere Antriebsmittel, z. B. Riemen, Kardanwellen, können zur Relativbewegung der Trommel zum inneren Zylinder an Stelle des oben angeführten Antriebes vorgesehen sein.

Wie der Fig. 3 zu entnehmen, weist der stationäre Zylinder 21 einen unteren Teil 37 und einen temperierenden Teil 39 auf. Beide Teile 37 und 39 sind über Schrauben 41 und 43 miteinander verbunden. Die Verbindung kann aber auch auf andere Weise erfolgen.

Der untere Teil 37 und der temperierte Teil 39 weisen äußere teilzylindrische Flächen auf, welche gemeinsam die äußere Zylinderfläche 27 bilden. Die inneren Abschnitte der beiden Teile 37 und 39 sind so ausgebildet, daß ein axial verlaufender Zuleitkanal 45 gebildet ist, welcher im wesentlichen sich über die gesamte Länge des Zylinders 21 erstreckt. Die Zuführung der viskosen Masse erfolgt unter Druck über die Zuführung 47 in den Zuleitkanal 45 (Fig. 1). Die Zuführung 47 ist an einem Ende des stationären Zylinders 21 mit demselben verbunden, um die viskosen Massen in den Zuleitkanal 45 zuzuführen.

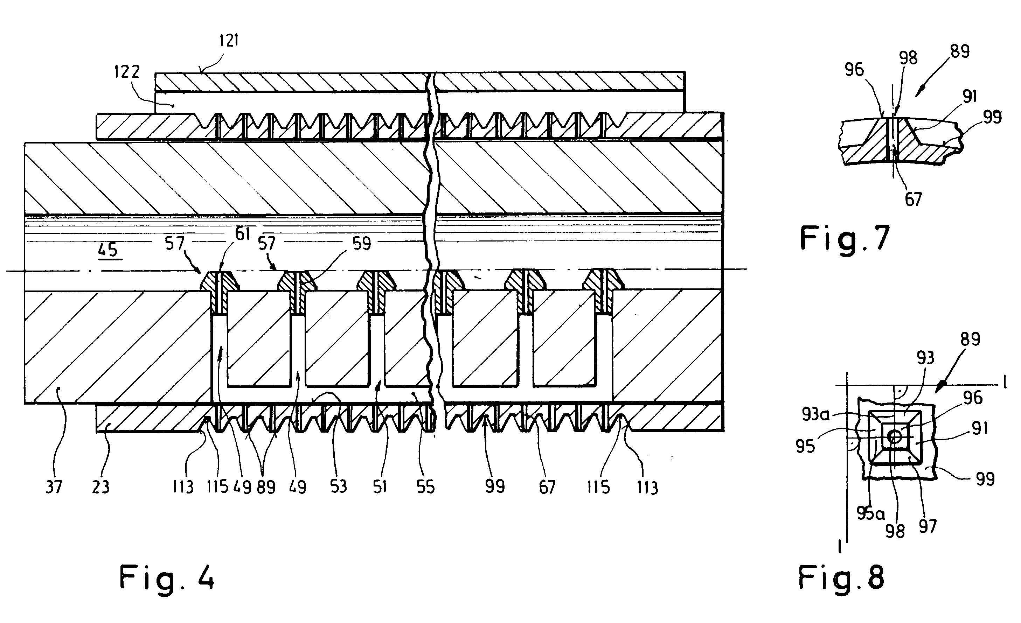

Wie Fig. 4 zu entnehmen, weist der untere Teil 37 des stationären Zylinders eine Vielzahl von radialen Durchführungen 49 auf, welche von dem axialen Zuleitkanal 45 nach unten weisen. Jede radiale Durchführung 49 bildet den Teil eines Kanales, durch welchen die viskosen Massen vom inneren Zylinder ausgepreßt werden. Die Austrittsenden 51 jeder Durchführung 49 leitet die viskosen Massen gegen die innere Zylinderfläche 53 der rotierenden Trommel 23. Der Verteilerkanal 55 bildet einen Teil des Austrittsweges und ist zwischen den Austrittsenden der Durchführungen 49 und der Trommel 23 vorgesehen, um einen Schlitz od. dgl. entlang der inneren Oberfläche der Trommel 23 zu bilden. Der Verteilerkanal 55 bewirkt, daß die zu extrudierende Masse mit konstantem Druck entlang des gesamten Kanales ausgepreßt werden kann, wodurch die Gleichmäßigkeit der Massetropfen 56, welche auf das Förderband 15 ausgepreßt werden, erhitzt wird. Es ist evident, daß ein Verteilerkanal nicht vorgesehen sein muß, wenn die Durchführungen zahlenmäßig ident und fluchtend mit den formgebenden Kanälen, wie später beschrieben, ausgebildet sind. Selbstverständlich können auch andere Formen für den Austrittskanal oder den inneren Zylinder 21 vorgesehen sein.

Wie in Fig. 4 dargestellt, sind Düsen 57 an der Mündung von jeder radialen Durchführung 49 vorgesehen. Die Düsen 57 weisen eine kegelstumpfförmige Kappe 59 und einen Kanal 61 auf, welcher von Düse zu Düse unterschiedlichen Querschnitt zum Druckausgleich aufweisen kann (nicht dargestellt) und sich entlang der gesamten Länge des Rohrstückes erstreckt. Die Düsen 57 bewirken eine gleichmäßige Druckverteilung. Weiters wird dadurch, daß die Kanäle 61 das Mündungsende oberhalb der unteren Fläche des axialen Zuleitkanales 45 aufweisen, eine Sedimentierung aus der Masse am Boden des axialen Zuleitkanales ermöglicht. Dadurch wird bewirkt, daß keine Sedimente die Offnungen der Durchführungen 49 verlegen. Bei anderen Anwendungen kann es erwünscht sein, ein Mischelement oder einen Rechen innerhalb des axialen Zuleitkanales 45 vorzusehen, um die Feststoffe innerhalb der Masse in Suspension zu halten. In diesem Fall muß die Mündungsöffnung der Durchführungen 49 mit der unteren Fläche des Zuleitkanales fluchten.

Der in Fig. 3 dargestellte temperierende Teil 39 ist bevorzugt aus einem hitze- und kälteleitfähigen Material, z. B. rostfreiem Stahl, aufgebaut. Im temperierten Teil 39 ist ein Wärmeleitkanal 63 vorgesehen, welcher an einem Ende des temperierten Teiles 39 in sich geschlossen ist und einen kontinuierlichen Kanal in und aus dem temperiertenTeil 39 bildet. Ein wärmeleitendes Medium, z. B. Dampf, Wärmeleitflüssigkeit, Heißwasser oder Kühlmittel, wird durch den Wärmeleitkanal 63, Zu- und Ableitungen 65 und 66 durch den Wärmeleitkanal geleitet. Das wärmeleitende Medium wird entweder, um das temperierende Teil zu erhitzen oder zu kühlen, eingesetzt. Da dieser Teil in Kontakt mit der auszupressenden Masse ist, bewirkt der temperierende Teil eine Erhitzung oder Kühlung der Masse, wodurch dieselbe die erwünschte Viskosität beibehält.

Die Trommel 23 ist aus Metall, beispielsweise Stahl, aufgebaut und weist eine Vielzahl von formenden Kanälen 67 auf, welche durch die Trommelwandung führen, wodurch die Innenseite mit der Außenseite der Trommel 23 verbunden ist. Die Austrittsöffnungen der formenden Kanäle 67 sind in der äußeren zylindrischen Fläche 71 der Trommel 23. Der Bereich des Zylinders, welcher die Austrittsöffnungen umgibt, ist mechanisch abgearbeitet oder bereits beim Gießen entsprechend geformt. Durch diese mechanische Bearbeitung werden düsenartige Erhebungen 75, 89 an der äußeren Oberfläche des Zylinders und die Täler 99, welche die Erhebungen voneinander trennen, gebildet.

Eine Ausführungsform der Fortsätze, also der düsenartigen Erhebungen 75, ist in den Fig. 5 und 6 gezeigt, wobei die Erhebung 75 eine etwa konische oder kegelstumpfförmige Form aufweist. Die Erhebung 75 weist eine obere Fläche 81 auf, welche in der Zylinderfläche 71 (Fig. 3) der Trommel 23 angeordnet ist. Die Erhebung 75 weist eine sich verjüngende, insbesondere konisch geformte, Führungsfläche 83 mit einer Kegelachse auf. Die Führungsflächen 83 konvergieren zur Austrittsöffnung 86 des formenden Kanales 67. Im unteren Bereich der Erhebung 75 wird die Führungsfläche 83 jeweils durch eine Fläche des Tales 87 unterbrochen. Die Bodenflächen der Täler liegen in einer zylindrischen Fläche und verbinden die einzelnen Erhebungen 75, wie in Fig. 1 dargestellt. Die in Fig. 1 und 2 dargestellten Erhebungen weisen kegelstumpfförmige Gestalt auf. Eine weitere' Ausführungsform von einer düsenartigen Erhebung 89 ist in den Fig. 7 und 8 beschrieben. Die Erhebung 89 ist als Pyramide bzw. Pyramidenstumpf ausgebildet. Die Erhebung 89 weist vier Führungsflächen 91, 93, 95 und 97 auf, welche zur Austrittsöffnung 98, die in der Fläche 96 liegt, konvergieren und einen Kanal 67 bilden. An der Basis der Erhebung 89 und der Führungsflächen 91, 93, 95, 97 grenzt die zylindrische Fläche des Tales 99 an. Die Kanäle 67 weisen kreisförmige Austrittsöffnungen auf und besitzen durchgehend denselben Querschnitt mit identer Querschnittsfläche.

Wie in Fig. 5 dargestellt, können die Erhebungen oder Fortsätze 75 oder 89 als eigene Einsätze 100 ausgebildet sein, die mit der Trommel 23 verbunden sind. Die einzelnen Einsätze 100 sind in einer Vielzahl von Bohrungen 102 angeordnet, die durch die Trommel 23 führen. Die Einsätze 100 weisen ein Gewinde zum Hineinschrauben in die mit einem Gewinde versehenen Bohrungen 102 auf. Es kann auch eine Befestigung durch Schweißen od. dgl. erfolgen.

In einer Ausführungsform weist die Trommel 23 eine Dicke von ca. 0,35 Zoll (ca. 9,5 mm) auf, und es sind mechanisch 24 im Umfang gleichmäßig voneinander angeordnete Reihen von pyramidenstumpfförmigen Erhebungen vorgesehen. Jede Erhebung hat eine Höhe von ungefähr 0,25 Zoll (6,7 mm), gemessen von der Talsohle. Um eine effiziente Nutzung des Raumes zu ermöglichen, sollen die Erhöhungen so nah wie möglich aneinander sein, wobei die Täler zur Aufnahme der Überschußmasse noch von ausreichender Größe' sein müssen. Weiters ist es von Vorteil, wenn die Tropfen soweit voneinander sind, daß sie nicht nach oder vor dem Auspressen ineinanderfließen. Oer Durchmesser der formenden Kanäle ist von der Größe der zu formenden Tropfen und der Viskosität der Masse abhängig und liegt im allgemeinen zwischen 1,5 mm und 3,0 mm.

Wie aus Fig. 2 ersichtlich, sind die Erhebungen 98 entlang der äußeren Oberfläche der Trommel 23 angeordnet und definieren Führungsflächen und Täler 99, welche die Austrittsöffnungen der formenden Kanäle umgeben. Die Täler 99 sind durch die Führungsflächen und die eigentlichen Talsohlenflächen gebildet. Die Erhebungen sind vorzugsweise in einer Mehrzahl von in Längsrichtung ausgerichteten Reihen angeordnet, die entlang des Umfanges in gleichen Abständen vorgesehen sind. In Fig. 3 sind 24 Reihen dargestellt. Oer Abstand zwischen den benachbarten formenden Kanälen 67 ist vorteilhaft ident und wie der longitudinale Abstand zwischen benachbarten formenden Kanälen 67 derselben Reihe. Es ist vorteilhaft, ein quadratisches Muster der ausgepreßten Tropfen zu erreichen. Wie in Fig. 9 zu sehen, kann auch eine Anordnung verwendet werden, bei welcher die Täler 99 zwischen benachbarten in Umfangsrichtung angeordneten Reihen größer ist als die zwischen benachbarten Erhebungen in derselben Reihe entlang einer Erzeugenden der Trommel.

Wie in Fig. 1 gezeigt, sind an den beiden Enden der Trommel 23 Ringflächen 111 vorgesehen. Jeder Randbereich ist durch eine glatte zylindrische Oberfläche gebildet, die frei von Erhebungen ist (der Zahnkranz 31 grenzt an einen Randbereich 111 an). Der Durchmesser der Trommel 23 im Randbereich ist größer als der Durchmesser der Trommel mit den Tälern. Eine abgewinkelte ringförmige Sperrfläche 113 (Fig. 2 und 4) ist zwischen jedem Randbereich 111 und Tälern 115 vorgesehen, so daß sie unmittelbar zu den entsprechenden Randbereichen benachbart sind.

Zum Betrieb der Vorrichtung wird die auszupressende Masse unter Druck durch die Zuführung 47 (Fig. 1) in den axialen Zuleitkanal 45 (Fig. 4) des stationären Zylinders 21 geleitet. Innerhalb des stationären Zylinders 21 bewirkt der innere temperierende Teil 39, daß die zu extrudierende Masse auf eine bestimmte Temperatur gehalten wird, wodurch eine erwünschte Viskosität der Masse beibehalten wird. Die Temperatur des temperierenden Teiles 39 hängt von der Temperatur des Heiz- oder Kühlmittels ab, welches durch die Wärmekanäle 63 geleitet wird, ab. Die auszupressende Masse fließt von dem axialen Zuleitkanal 45 in die radialen Durchführungen 49 (Fig. 4) und von dort in den Verteilerkanal 55, welcher Sorge trägt, daß die zu extrudierende Masse entlang der gesamten Länge des Verteilerkanales 55 gleichen Druck aufweist.

Die Trommel 23 rotiert um den stationären Zylinder in Richtung des Pfeiles 117 (Fig. 3). Bei konstanter Umdrehungszahl tritt ein periodisches Fluchten bzw. Abdecken zwischen den formenden Kanälen 67 des äußeren Zylinders und den Durchführungen 49 und dem Verteilerkanal 55 des stationären Zylinders ein. Wenn die Kanäle im wesentlichen miteinander fluchten, dann wird die Masse vom Verteilerkanal 55 durch die formenden Kanäle 67 auf das bewegte Förderband ausgepreßt, auf welchem die Massetropfen 56, wie in Fig. 3 dargestellt, geformt werden. Andere Formen als Tropfen können durch Veränderungen, z. B. der Gestalt der Austrittsöffnung, der formenden Kanäle 67 erreicht werden.

Üblicherweise bleibt ein bestimmter Anteil von überschüssiger Masse an den Austrittsöffnungen 69 (Fig. 3, 86 in Fig. 5, 98 in Fig. 7) der formgebenden Kanäle 67 der Erhebungen einer bestimmten Reihe, sobald die Masse auf das Förderband aufgepreßt wurde. Bei einer fließfähigen und viskosen Masse fließt die Überschußmasse entlang der Führungsflächen 83 (Fig. 5) der Düsen zu und auch weg von dem Tal 87 unter dem Einfluß der Schwerkraft als auch der Adhäsionskräfte, durch welche die Masse auf der Oberfläche des Zylinders festgehalten wird, genauso wie durch die Zentrifugalkräfte, die durch die Rotation des Zylinders, wenn dieser kontinuierlich rotiert, bewirkt wird. Die Täler und Führungsflächen der Vielzahl von Erhebungen fungieren als Becken, welche die Überschußmasse aufnehmen. Die Überschußmasse wird von dem betreffenden formenden Kanal wegbewegt, aus dem die Überschußmasse unter Schwerkrafteinwirkung ausgepreßt wurde.

Unter Mitwirkung von Schwerkraft, Adhäsions- und Zentrigualkräften werden die Überschußmassen durch den Kanal zu den niedrigsten Punkten des vertikalen Bodens des Zylinders geleitet, wo eine Reihe von Düsen in Auspreßstellung bewegt wurde und die ausgepreßten Massetropfen auf das Förderband gepreßt werden. Wenn die Überschußmassen die Auspreßstellung erreichen, so setzen dieselben die nach unten gerichtete Bewegung entlang der Führungsflächen der Düsen in Riochtung zum Austrittsende derselben fort, wo die Uberschußmassen mit dem augenblicklich extrudierten Massen einen Massetropfen bilden.

Die Überschußmassen haften an der oberen Fläche 81 (Fig. 6) oder 96 (Fig. 8), welche die Austrittsöffnungen 98 der formenden Kanäle 67 umgeben, unmittelbar nachdem die Massen ausgepreßt werden. Bei rotierender Trommel 23 wird die Überschußmasse zuerst unter Einwirkung der Schwerkraft in die Kanäle bewegt (insbesondere beginnend, nachdem die Trommel die ersten 90° der Rotation aus der Auspreßposition zurückgelegt hat) und dann wird die Masse entlang der Trommel in Richtung zur niedrigsten Stellung, d. h. der Auspreßstellung, geleitet. Wenn sich die Trommel durch die letzten 90° bewegt, unmittelbar vor der Auspreßstellung, bewegen Schwerkraft und Zentrifugalkräfte die Überschußmasse nach außen zur Spitze der zur Austrittsöffnung 98 der Erhebung 89 und diese vereint sich dort mit der aus der Erhebung ausgepreßten Masse. In Abhängigkeit von dem Raum zwischen den Erhebungen, der Viskosität der Masse u. dgl. kann ein Teil der Überschußmasse zwischen den Erhebungen derselben Reihe während der ersten 180°-Drehung bewegt werden und sodann durch die Schwerkraft zurückgeführt werden, womit in der Auspreßposition die Überschußmasse mit der ausgepreßten Masse vereinigt wird.

Bei rotierender Trommel neigt die Überschußmasse seitlich in Richtung zu den Randbereichen zu fließen. Aus diesem Grund sind die Sperrflächen 113 vorgesehen. Diese Sperrflächen dienen dazu, den seitlichen Abfluß der Überschußmassen in die Randbereiche zu verhindern. Die Sperrfläche 113 kann eine planare konusähnliche Fläche, wie in Fig. 4 dargestellt, sein. Alternativ können Nuten 114 (Fig. 2) neben den Erhebungen eingearbeitet sein. Die Nut 114 ist radial nach innen zu dem Tal 115 geneigt.

Wie in den Fig. 1, 6, 8 und 9 ersichtlich, weisen die Erhebungen 75, 89 Flächen 83 mit einer Fallinie 83a (Fig. 6) Flächen 93, 95 mit Fallinien 93a und 95a (Fig. 8), die normal zur Längserstreckung 1 der Täler 87, 99 verlaufen, auf.

Der freie Strömungsquerschnitt der Täler 87, 99 kann mit einer derartigen Ausbildung besonders groß gehalten werden, da die Schnittlinien der Flächen mit der Talsohlfläche parallel zur Längserstreckung der Täler verläuft.

Um ein erwünschtes Fließen zu erreichen, müssen die Überschußmassen flüssig sein. Die Masse neigt jedoch zur Abkühlung und wird damit viskoser. Es ist daher zweckmäßig, die Temperatur zu steuern.

In einer Ausführungsform ist eine kontaktfreie Heizung 121 mit elektrischen Infrarotstrahlen 119 in Abstand zur Trommel vorgesehen. Die kontaktfreie Heizung 121 führt Hitze zu der Überschußmasse auf der äußeren Oberfläche der Trommel zu und hilft, die Verfestigung zu vermeiden. Wie in Fig. 3 dargestellt, ist die Heizung so angeordnet, daß sie zumindest von 90° bis 180° der Rotation folgend nach der Auspreßstellung abdeckt.

Die Heizung 121 kann auch mit metallischem Wärmetauscher 120 aufgebaut sein, durch welchem erhitzte Flüssigkeit hindurchgeleitet wird. Die Heizung 121 weist eine flache gekrümmte Oberfläche 122 gegenüber der äußeren Oberfläche der Trommel 23 auf. Es können jedoch auch andere Heizungen verwendet werden.

Wie in Fig. 3 schematisch im Schnitt dargestellt, kann auch eine Rakel 126 vorgesehen sein. Die Rakel 126 weist, wie in Fig. 3a dargestellt, eine Scheide auf, die den Erhebungen entsprechende Lücken 124 und den Tälern entsprechende Vorsprünge 125 aufweisen. Eine derartige Rakel kann in Sonderfällen für eine zusätzliche Verteilung bzw. Abnahme der Überschußmasse auf bzw. von der Trommel bewirken.

Eine Zuführung der Massen in das Innere der Trommel kann beispielsweise mit einer Vorrichtung gemäß der deutschen Patentschrift 28 53 054 oder auch gemäß der europäischen Patentanmeldung 0477164 durchgeführt werden.

## Patentansprüche

1. Vorrichtung zur portionierten Abgabe von fließfähigen Massen mit einer um eine im wesentlichen horizontalen Achse (25) um mehr als 360° drehbaren Trommel (23) mit einem zylinderförmigen Mantel, welche eine Vielzahl durch diesen hindurchgeführte, insbesondere radial verlaufende, Kanäle (67) mit vorzugsweise kreisförmigen Austrittsöffnungen (86, 98) aufweist, einer Zuführungseinrichtung für die fließfähige Masse in das Innere der Trommel (23) und einer unter der Trommel (23) angeordneten, die Masseportionen aufnehmenden Transporteinrichtung (13), z. B. endloses Förderband (15), auf welcher die Masseportionen, insbesondere Massetropfen (56), zumindest teilweise, verfestigen, dadurch gekennzeichnet, daß die Austrittsöffnungen (86, 98) der Kanäle (67) auf Erhebungen (75, 89) am zylinderförmigen Mantel der drehbaren Trommel (23) vorgesehen sind, die durch Täler (87, 99, 115) voneinander getrennt sind.

2. Vorrichtung nach Anspruch 1, dadurch gekennzeichnet, daß die Erhebungen (75, 89) und Täler (87, 99, 115) durch Bearbeitung der Oberfläche des zylinderförmigen Mantels der Trommel (23) gebildet sind.

3. Vorrichtung nach Anspruch 1 oder 2, dadurch gekennzeichnet, daß durch die Austrittsöffnungen (86, 98) eine zum zylinderförmigen Mantel der Trommel (23) konzentrische äußere Zylinderfläche (71) definiert ist, in welcher die Austrittsöffnungen liegen.

4. Vorrichtung nach Anspruch 1, 2 oder 3, dadurch gekennzeichnet, daß jede Austrittsöffnung (86, 98) in jeweils einer Fläche (81, 96) angeordnet sind.

5. Vorrichtung nach einem der Ansprüche 1 bis 4, dadurch gekennzeichnet, daß die aus dem Mantel der Trommel (23) herausragenden Erhebungen (75) kegelstumpfförmig sind.

6. Vorrichtung nach einem der Ansprüche 1 bis 4, dadurch gekennzeichnet, daß die aus dem Mantel der Trommel (23) herausragenden Erhebungen (89) pyramidenstumpfförmig sind.

7. Vorrichtung nach einem der Ansprüche 1 und 3 bis 6, dadurch gekennzeichnet, daß die Erhebungen (75, 89) durch in Bohrungen (102) im Mantel der Trommel (23) festgelegte Einsätze (100) gebildet sind.

8. Vorrichtung nach Anspruch 7, dadurch gekennzeichnet, daß die Einsätze (100) in den Bohrungen (102) lösbar befestigt, insbesondere eingeschraubt, sind.

9. Vorrichtung nach einem der Ansprüche 1 bis 8, dadurch gekennzeichnet, daß Täler (87, 99, 115) entlang von Erzeugenden des zylinderförmigen Mantels der Trommel (23) verlaufen.

10. Vorrichtung nach einem der Ansprüche 1 bis 9, dadurch gekennzeichnet, daß Täler (87, 99 115) in Umfangsrichtung des zylinderförmigen Mantels der Trommel (23) verlaufen.

11. Vorrichtung nach einem der Ansprüche 1 bis 10, dadurch gekennzeichnet, daß die Erhebungen (75, 89) Flächen (83, 91, 93, 95, 97) besitzen, die eine Fallinie (83a, 93a, 95a) aufweisen, welche normal zur Längserstreckung der Täler (87, 99, 115) verläuft.

12. Vorrichtung nach einem der Ansprüche 1 bis 11, dadurch gekennzeichnet, daß im Endbereich der Trommel (23) zumindest eine radial verlaufende Nut (114) vorgesehen ist, mit welcher die Erhebungen (75, 89) zu dem Trommelende abgegrenzt sind.

13. Vorrichtung nach einem der Ansprüche 1 bis 12, dadurch gekennzeichnet, daß in zumindest einem Endbereich der Trommel (23) ein von Erhebungen freie, insbesondere zylindrische, Ringfläche (111) vorgesehen ist.

14. Vorrichtung nach einem der Ansprüche 1 bis 13, dadurch gekennzeichnet, daß die Erhebungen (75, 89) mit einem einheitlichen Abstand zueinander in Richtung entlang von Erzeugenden des zylinderförmigen Mantels der Trommel (23) angeordnet sind (Fig. 1 und Fig. 2).

15. Vorrichtung nach einem der Ansprüche 1 bis 14, dadurch gekennzeichnet, daß die Erhebungen (75, 89) mit einem einheitlichen Abstand zueinander in Reihen in Umfangsrichtung des zylinderförmigen Mantels der Trommel (23) hintereinander angeordnet sind.

16. Vorrichtung nach einem der Ansprüche 1 bis 15, dadurch gekennzeichnet, daß eine Heizeinrichtung (121), die die Trommel (23), insbesondere in Abstand von derselben, teilweise umgibt, gegebenenfalls teilweise umhüllt, vorgesehen ist.

17. Vorrichtung nach Anspruch 16, dadurch gekennzeichnet, daß die Heizeinrichtung (121) einen, insbesondere elektrischen, Infrarotstrahler (119) aufweist.

18. Vorrichtung nach einem der Ansprüche 1 bis 17, dadurch gekennzeichnet, daß die Kanäle (67) von der Austrittsöffnung (86, 98) bis zum Inneren der Trommel (23) denselben Querschnitt mit identer Querschnittsfläche aufweisen.

19. Vorrichtung nach einem der Ansprüche 1 bis 18, dadurch gekennzeichnet, daß die Kanäle (67) während der Abgabe der fließfähigen Masse in das Innere der Trommel (23) in einem Verteilerkanal (55), welcher parallel zur Achse (25) der Trommel (23) verläuft, münden.

20. Vorrichtung nach Anspruch 19, dadurch gekennzeichnet, daß der Verteilerkanal (55) über in diesen mündende Düsen (57) gespeist ist, welche in Richtung der Achse (25) verteilt angeordnet sind und zu welchen die fließfähigen Massen über einen parallel zur Achse (25) der Trommel (23) erstreckenden Zuleitkanal (45) geführt werden.

21. Vorrichtung nach Anspruch 20, dadurch gekennzeichnet, daß die Düsen (57) entsprechend der Druckverteilung im Zuleitkanal (45) unterschiedlichen Querschnitt aufweisen, so daß eine gleichmäßige Druckverteilung im Verteilerkanal (55) für die fließfähigen Massen in Richtung der Achse (25) der Trommel (23) eintritt.

22. Vorrichtung nach einem der Ansprüche 1 bis 21, dadurch gekennzeichnet, daß die Austrittsöffnungen (86, 89) der Erhebungen (75, 89) an einer, insbesondere feststehenden, Rakel (122) vorbeiführbar sind.

23. Vorrichtung nach Anspruch 22, dadurch gekennzeichnet, daß die in Umfangsrichtung verlaufenden Täler (87, 99, 115) und gegebenenfalls die Flächen der Erhebungen (75, 89) an der Rakel (126) vorbeiführbar sind.

24. Vorrichtung nach Anspruch 22 oder 23, dadurch gekennzeichnet, daß die in der äußeren Zylinderfläche (71) angeordneten Flächen (81, 96) der Erhebungen an der Rakel (126) vorbeiführbar sind.

## Claims

1. Device for portioned delivery of fluid substances with a drum (23) which is rotatable by more than 360° about an essentially horizontal axis (25) and has a cylindrical casing which exhibits a plurality of channels (67) passing, in particular running radially, through the latter and having preferably circular outlet openings (86, 98), a feeding device for feeding the fluid substance into the interior of the drum (23) and a conveying device (13), e.g. endless conveyor belt (15), which is disposed under the drum (23) and receives the portions of substance and on which the portions of substance, in particular drops of substance (56), at least partly solidify, characterized in that the outlet openings (86, 98) of the channels (67) are provided on projections (75, 89) on the cylindrical casing of the rotatable drum (23) which are separated from one another by troughs (87, 99, 115).

2. Device according to claim 1, characterized in that the projections (75, 89) and troughs (87, 99, 115) are formed by machining the surface of the cylindrical casing of the drum (23).

3. Device according to claim 1 or 2, characterized in that the outlet openings (86, 98) define an outer cylinder surface (71) which is concentric with the cylindrical casing of the drum (23) and in which the outlet openings lie.

4. Device according to claim 1, 2 or 3, characterised in that each outlet opening (86, 98) is in each case disposed in one surface (81, 96).

5. Device according to one of claims 1 to 4, characterized in that the projections (75) protruding out of the casing of the drum (23) are the shape of a truncated cone.

6. Device according to one of claims 1 to 4, characterized in that the projections (89) protruding out of the casing of the drum (23) are the shape of a truncated pyramid.

7. Device according to one of claims 1 and 3 to 6, characterized in that the projections (75, 89) are formed by inserts (100) fixed in holes (102) in the casing of the drum (23).

8. Device according to claim 7, characterized in that the inserts (100) are secured detachably, in particular screwed, in the holes (102).

9. Device according to one of claims 1 to 8, characterized in that troughs (87, 99, 115) run along generatrices of the cylindrical casing of the drum (23).

10. Device according to one of claims 1 to 9, characterized in that troughs (87, 99, 115) run in the circumferential direction of the cylindrical casing of the drum (23).

11. Device according to one of claims 1 to 10, characterised in that the projections (75, 89) have surfaces (83, 91, 93, 95, 97) which exhibit a gradient (83a, 93a, 95a) which runs at right angles to the longitudinal extension of the troughs (87, 99, 115).

12. Device according to one of claims 1 to 11, characterized in that in the end area of the drum (23) there is at least one groove (114) which runs radially and separates the projections (75, 89) from the end of the drum.

13. Device according to one of claims 1 to 12, characterized in that in at least one end area of the drum (23) there is an annular surface (111) which is free of projections and in particular cylindrical.

14. Device according to one of claims 1 to 13, characterized in that the projections (75, 89) are disposed with uniform spacing in the direction along generatrices of the cylindrical casing of the drum (23) (fig. 1 and fig. 2).

15. Device according to one of claims 1 to 14, characterized in that the projections (75, 89) are disposed with uniform spacing in rows in the circumferential direction of the cylindrical casing of the drum (23) behind one another.

16. Device according to one of claims 1 to 15, characterized in that a heating device (121) is provided which partially surrounds, possibly partially encloses, the drum (23), in particular a distance from it.

17. Device according to claim 16, characterized in that the heating device (121) exhibits an, in particular electric, infra-red heater (119).

18. Device according to one of claims 1 to 17, characterized in that the channels (67) from the outlet opening (86, 98) to the interior of the drum (23) exhibit the same cross-section with an identical cross-section area.

19. Device according to one of claims 1 to 18, characterized in that during the delivery of the fluid substance into the interior of the drum (23) the channels (67) debouch in a distributing channel (55) which runs parallel with the axis (25) of the drum (23).

20. Device according to claim 19, characterized in that the distributing channel (55) is fed by means of nozzles (57) which debouch into it and which are disposed distributed in the direction of the axis (25) and to which the fluid substances are carried by means of a feeding channel (45) extending parallel to the axis (25) of the drum (23).

21. Device according to claim 20, characterized in that the nozzles (57) exhibit a different cross-section according to the pressure distribution in the feeding channel (45) so that uniform pressure distribution occurs in the distributing channel (55) for the fluid substances in the direction of the axis (25) of the drum (23).

22. Device according to one of claims 1 to 21, characterized in that the outlet openings (86, 89) of the projections (75, 89) can be moved past an, in particular stationary, doctor (122).

23. Device according to claim 22, characterized in that the troughs (87, 99, 115) running in the circumferential direction and possibly the surfaces of the projections (75, 89) can be moved past the doctor (126).

24. Device according to claim 22 or 23, characterized in that the surfaces (81, 96) of the projections disposed in the outer cylinder surface (71) can be moved past the doctor (126).

## Revendications

1. Dispositif pour délivrer des quantités dosées de masses fluides comportant un tambour (23) qui peut tourner d'un angle supérieur à 360° autour d'un axe (25) sensiblement horizontal et est pourvu d'une enveloppe cylindrique, laquelle enveloppe présente une pluratité de canaux (67), en particulier radiaux, à orifice de sortie (86, 98) de préférence circulaire qui traversent ladite enveloppe, un dispositif pour amener la masse fluide à l'intérieur du tambour (23) ainsi qu'un dispositif de transport (13), par exemple une bande transporteuse (15) sans fin, qui reçoit les quantités dosées de masse et est disposé sous le tambour (23) et sur lequel les quantités dosées de masse, en particulier des gouttes de masse (56), se solidifient au moins partiellement, caractérisé par le fait que les orifices de sortie (86, 98) des canaux (67) sont prévus sur des reliefs (75, 89) de l'enveloppe cylindrique du tambour (23) rotatif qui séparés les uns des autres par des creux (87, 99, 115).

2. Dispositif selon la revendication 1, caractérisé par le fait que les reliefs (75, 89) et les creux (87, 99, 115) sont formés par usinage de la surface de l'enveloppe cylindrique du tambour (23).

3. Dispositif selon la revendication 1 ou la revendication 2, caractérisé par le fait que les orifices de sortie (86, 98) définissent une surface cylindrique (71) extérieure qui est concentrique avec l'enveloppe cylindrique du tambour (23) et dans laquelle les orifices de sortie sont situés.

4. Dispositif selon la revendication 1, la revendication 2 ou la revendication 3, caractérisé par le fait que chaque orifice de sortie (86, 98) est disposé dans une surface (81, 96) propre.

5. Dispositif selon l'une des revendications 1 à 4, caractérisé par le fait que les reliefs (75) qui font saillie hors de l'enveloppe du tambour (23) ont une forme de tronc de cône.

6. Dispositif selon l'une des revendications 1 à 4, caractérisé par le fait que les reliefs (75) qui font saillie hors de l'enveloppe du tambour (23) ont une forme de tronc de pyramide.

7. Dispositif selon l'une des revendications 1 et 3 à 6, caractérisé par le fait que les reliefs (75, 89) sont formés par des inserts (100) placés dans des trous (102) dans l'enveloppe du tambour (23).

8. Dispositif selon la revendication 7, caractérisé par le fait que les inserts (100) sont Fixés de manière démontable, en particulier sont vissés, dans les trous (102).

9. Dispositif selon l'une des revendications 1 à 8, caractérisé par le fait que des creux (87, 99, 115) s'étendent le long de génératrices de l'enveloppe cylindrique du tambour (23).

10. Dispositif selon l'une des revendications 1 à 9, caractérisé par le fait que des creux (87, 99, 115) s'étendent dans la direction périphérique de l'enveloppe cylindrique du tambour (23).

11. Dispositif selon l'une des revendications 1 à 10, caractérisé par le fait que les reliefs (75, 89) comportent des surfaces (83, 91, 93, 95, 97) dont la pente (83a, 93a, 95a) est normale à la longueur des creux (87, 99, 115).

12. Dispositif selon l'une des revendications 1 à 11, caractérisé par le fait qu'il est prévu dans la région d'extrémité du tambour (23) au moins une rainure (114) radiale qui limite les reliefs (75, 89) par rapport à l'extrémité du tambour.

13. Dispositif selon l'une des revendications 1 à 12, caractérisé par le fait qu'il est prévu dans au moins une région d'extrémité du tambour (23) une surface (111) annulaire, notamment cylindrique, qui est exempte de reliefs.

14. Dispositif selon l'une des revendications 1 à 13, caractérisé par le fait que les reliefs (75, 89) sont disposés à distance constante les uns des autres le long de génératrices de l'enveloppe cylindrique du tambour (23) (figures 1 et 2).

15. Dispositif selon l'une des revendications 1 à 14, caractérisé par le fait que les reliefs (75, 89) sont disposés l'un à la suite de l'autre, à distance constante, en rangées dans la direction périphérique de l'enveloppe cylindrique du tambour (23).

16. Dispositif selon l'une des revendications 1 à 15, caractérisé par le fait qu'il est prévu un dispositif de chauffage (121) qui entoure partiellement le tambour (23), notamment à distance de celui-ci, et le cas échéant enveloppe partiellement ledit tambour.

17. Dispositif selon la revendication 16, caractérisé par le fait que le dispositif de chauffage (121) comporte un radiateur à infrarouges (119), notamment un radiateur électrique à infrarouges.

18. Dispositif selon l'une des revendications 1 à 17, caractérisé par le fait que, depuis l'orifice de sortie (86, 98) jusqu'à l'intérieur du tambour (23) les canaux (67), présentent la même section avec une surface en section identique.

19. Dispositif selon l'une des revendications 1 à 18, caractérisé par le fait que pendant la délivrance de la masse fluide, les cauaux (67) débouchent à l'intérieur du tambour (23) dans un canal de distribution (55) qui est parallèle à l'axe (25) du tambour (23).

20. Dispositif selon la revendication 19, caractérisé par le fait que la canal de distribution (55) est alimenté par des buses (57) qui débouche dans celui-ci, sont réparties dans la direction de l'axe (25) et auxquelles les masses fluides sont amenées par un canal d'alimentation (45) qui s'étend parallèlement à l'axe (25) du tambour (23).

21. Dispositif selon la revendication 20, caractérisé par le fait que les buses (57) ont une section différente en fonction de la répartition de la pression dans le canal d'alimentation (45), de sorte que l'on obtient une répartition de pression homogène à l'intérieur du canal de distribution (55) pour les masses fluides, dans la direction de l'axe (25) du tambour (23).

22. Dispositif selon l'une des revendications 1 à 21, caractérisé par le fait que les orifices de sortie (86, 89) des reliefs (75, 89) peuvent passer devant une racle (122), notamment une racle fixe.

23. Dispositif selon la revendication 22, caractérisé par le fait que les creux (87, 99, 115) qui s'étendent dans la direction périphérique et éventuellement les surfaces des reliefs (75, 89) peuvent passer devant la racle (126).

24. Dispositif selon la revendication 22 ou la revendication 23, caractérisé par le fait que les surfaces (81, 96) des reliefs situés dans la surface cylindrique extérieure (71) peuvent passer devant la racle (126).
